# EUROPEAN PATENT APPLICATION

(11) **EP 2 525 436 A1**
(43) Date of publication of application: **21.11.2012**
(21) Application number: 10842835.0
(22) Date of filing: 14.01.2010
(51) Int. Cl.: H01M 10/44, H01M 10/46, H02J 7/00

(54) **ELECTRIC POWER EXCHANGING EQUIPMENT**

(71) Applicant: Chang, Yichang, Taipei County 22146 (TW)
(72) Inventor: Chang, Yichang, Taipei County 22146 (TW)
(74) Representative: Horak, Michael
(86) International application number: PCT/CN2010/070176
(87) International publication number: WO 2011/085551

(57) **Abstract**

An electric power exchanging equipment (3) comprises a main body (31) which has a containing room (32), and a side edge of the containing room defines a battery fixing block (33). The fixing block (33) extends toward the containing room (32) in order to define a holding room (331) for holding a battery (4). The containing room (32) can hold batteries of different standards and dimensions.

## Description

### (a) Technical Field of the Invention

The present invention generally relates to an electromechanical field, and more particularly to an electric power exchanging equipment.

### (b) Description of the Prior Art

It is known that consumer electronic products (such as a mobile phone, a digital camera, and an MP3) are widely used. To provide electrical power to the consumer electronic products, the consumer electronic products are often coupled with a battery to receive electrical power. The battery used is generally a secondary battery that allows of repeated recharge. Consequently, an electric charger becomes a necessary peripheral device.

However, since new consumer electronic products are always being developed, to satisfy the desires of the modem people for innovation and distinctive personal styles, all the manufacturers make consumer electronic products with vivid configurations and coloring for distinction. Similarly, the batteries that are used in the consumer electronic products are designed devotedly for specific consumer electronic product and work with specific electric charger, making it not possible to share with electric chargers of other brands.

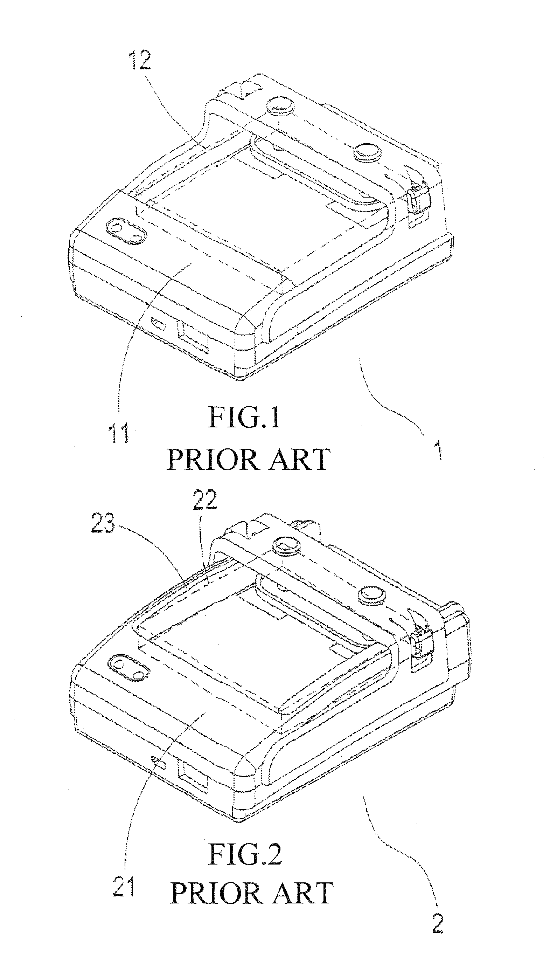

An electric charger that can be commonly used with batteries of different specifications and brands is developed by the manufacturers. As shown in FIG 1, the conventional electric charger 1 comprises a body 11. The body 11 I forms a containing room 12 that is capable of receiving and holding batteries of various specifications therein for electric charging.

As shown in FIG 2, another conventional electric charger 2 comprises a body 21. The body 21 forms a containing room 22 that is capable of receiving and holding therein various batteries of different specifications. The containing room 22 has two sides each forming a side wall 23. With the arrangement of the side walls 23, a battery can be securely received and held in the containing room 22 for electric charging.

However, the above described electric chargers 1,2 show the following problems in the use thereof:
(1) The containing room 12 of the electric charger 1 is not provided with the side walls 23 of the electric charger 2 and this makes it possible to receive and hold a battery of a large size. However, in charging a battery, the battery is provided with a function of fixing so that the battery can get easily detached from the containing room 12.
(2) The containing room 22 of the electric charger 2 is provided with a side wall 23 at each of two sides thereof, so that when the size of a battery is excessively large, the battery cannot be received in the containing room 22. Thus, improvement is desired.

### SUMMARY OF THE INVENTION

The objective of the present invention is to provide an electric power exchanging equipment, which solves the problems that for a conventional electric charger that does not have a fixing device, a battery may get easily falling, and for a conventional electric charger that has a fixing device, it is generally not fit to a battery having an excessively large size.

The technical solution of the present invention is that a main body is included and the main body forms a containing room for receiving and holding a predetermined battery The containing room has a side forming a fixing block. The fixing block extends through the containing room to define a holding room. The holding room can receive and hold various predetermined batteries of different configurations and sizes.

The fixing block can be arranged as a side wall having a curved surface, a cylindrical peg, or a square peg.

The main body comprises a lid pivotally connected thereto.

The containing room comprises a retention member arranged therein for retaining a battery

The main body forms one or more connection holes.

The main body has another side that is opposite to the fixing block and forms a side edge.

The present invention has the following advantages: Various batteries of different specifications and sizes can be received in the holding room and the battery can be fixed by the fixing block for electric charging, thereby realizing a function of fixing battery.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view showing a conventional electrical charger.
FIG 2 is a perspective view showing another conventional electrical charger.
FIG 3 is a perspective view showing the present invention.
FIG 4 is a perspective view showing the present invention in an open condition.
FIG 5 is a perspective view showing an embodiment of the present invention.
FIG 6 is a perspective view showing another embodiment of the present invention.
FIG 7 is a perspective view showing another embodiment of the present invention.
FIG 8 is a perspective view showing another embodiment of the present invention.
FIG 9 is a perspective view showing a further embodiment of the present invention.
FIG 10 is a perspective view showing a further embodiment of the present invention.
FIG 11 is a perspective view showing a further embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

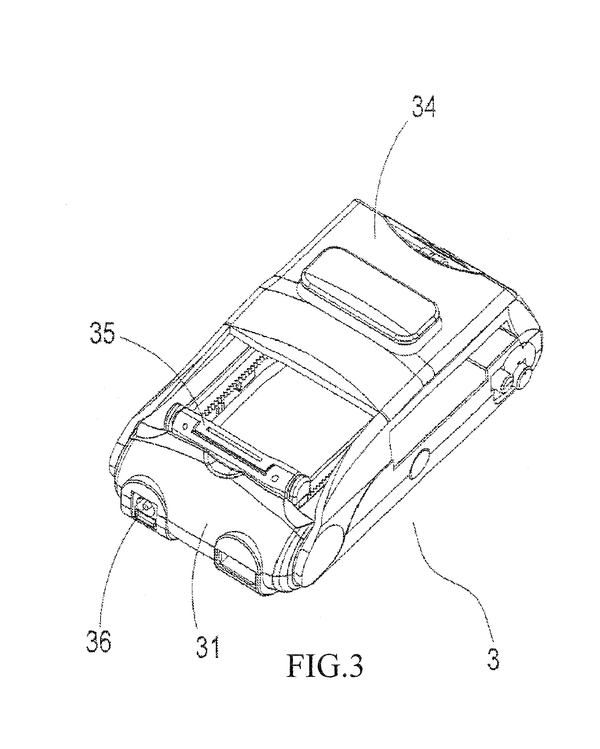

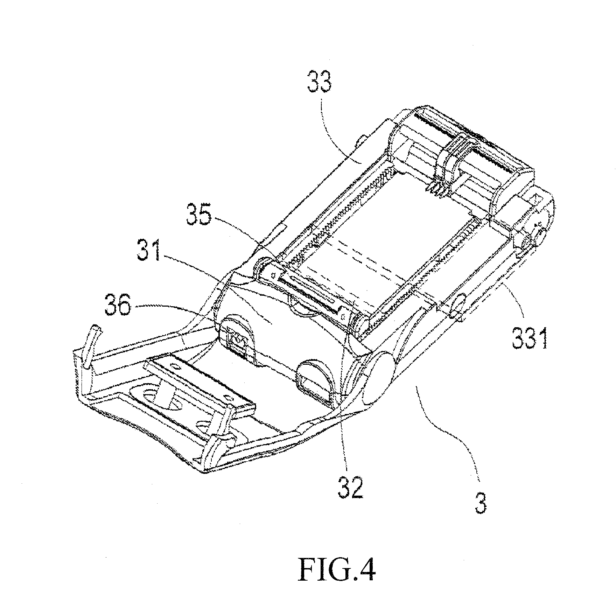

As shown in FIGS. 3 and 4, an electric power exchanging equipment 3 according to the present invention comprises a main body 31. A lid 34 is pivotally connected to the main body 31. The main body 31 forms one or more connection holes 36. The main body 31 forms a containing room 32. A retention member 35 is arranged inside the containing room 32 to fix a battery. The containing room 32 functions to receive therein a battery The containing room 32 has a side edge defining a fixing block 33. The fixing block 33 can be a wall. The fixing block 33 extends toward the containing room 32 to define a holding room 331.

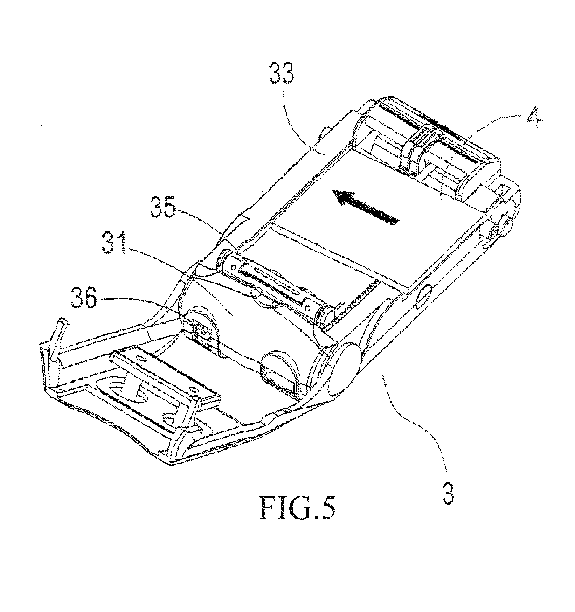

As shown in FIGS. 4 and 5, when a battery 4 is positioned in the containing room 32 of the electric power exchanging equipment 3 for charging, since the containing room 32 has a side that defines fixing block 33, in which the fixing block 33 can be a wall and the fixing block 33 extends toward the containing room 32 to define a holding room 331, the holding room 331 is capable of receiving therein various batteries 4 of different specifications and sizes. The battery 4 is fixed in position by the fixing block 33 for charging. As such, a practical advantage of positioning the battery 4 can be realized.

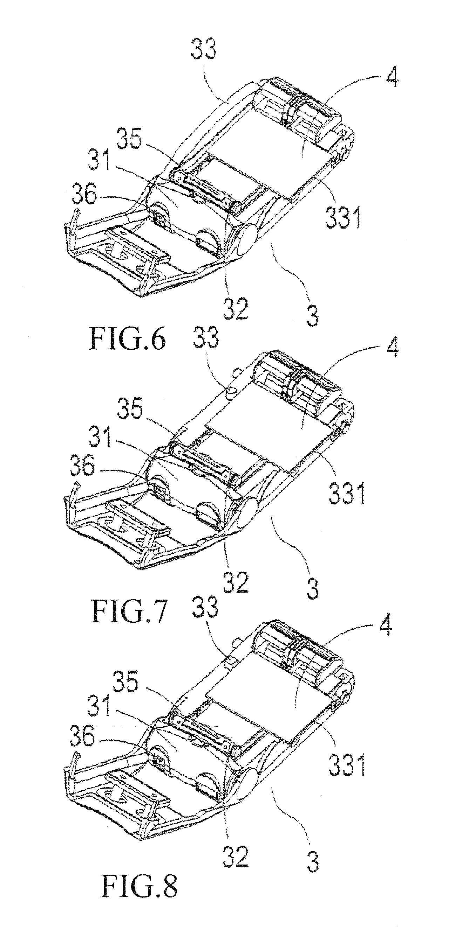

As shown in FIGS. 6-8, the fixing block 33 of the electric power exchanging equipment 3 can be arranged in the form of a side wall having a curved surface, a cylindrical peg, and a square peg.

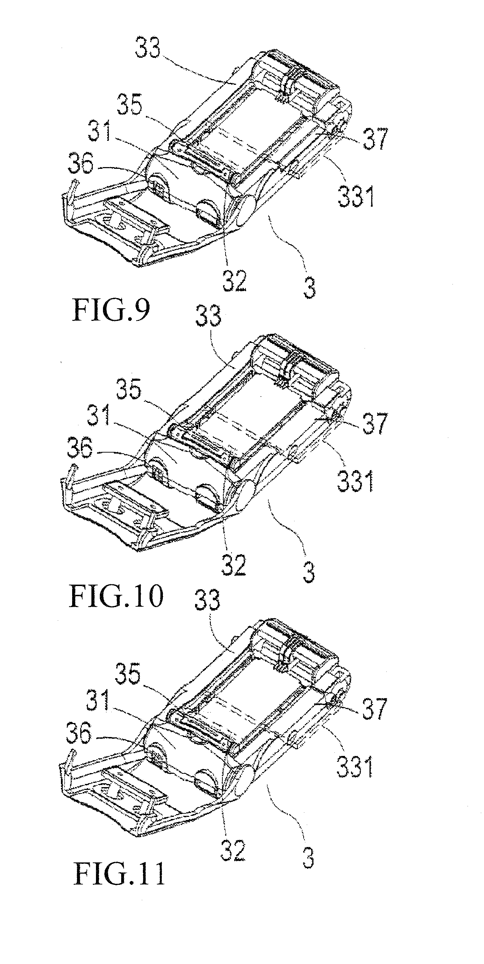

As shown in FIGS. 9-11, the main body 31 of the electric exchanging equipment 3 has another side that is opposite to the fixing block 33 and forms a side edge 37. The side edge 37 can be lower than the containing room 32 or of the same height as the containing room, or the side edge 37 can be slightly higher than the containing room 32 but not higher than the fixing block 33. As such, when a battery is set to charge, the battery can be received in the holding room 331 but the battery is not limited by the side edge 37 so that the battery can extend beyond the main boy 31 and shows a positioning effect realized through engagement with the fixing block 33.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An electric power exchanging equipment (3), comprising a main body (31), the main body (31) forming a containing room (32), **characterized in that**: the containing room (32) has a side defining a fixing block (33), the fixing block (33) extending toward the containing rook (32) to define a holding room (331), the holding room (331) being adapted to receive therein a battery (4).

2. The electric power exchanging equipment (3) according to claim 1, **characterized in that**: the fixing block (33) is arranged as a wall having a curved surface, a cylindrical peg or a square peg.

3. The electric power exchanging equipment (3) according to claim 1, **characterized in that**: the main body (31) comprises a lid (34) pivotally connected thereto.

4. The electric power exchanging equipment (3) according to claim 1, **characterized in that**: a retention member (35) is arranged inside the containing room (32) for fixing the battery (4).

5. The electric power exchanging equipment (3) according to claim 1, **characterized in that**: the main body (31) forms one or more connection holes (36).

6. The electric power exchanging equipment (3) according to claim 1, **characterized in that**: the main body (31) has another side that is opposite to the fixing block (33) and forms a side edge (37).
